# EUROPÄISCHE PATENTSCHRIFT

(11) **EP 1 820 641 B1**
(45) Veröffentlichungstag und Bekanntmachung des Hinweises auf die Patenterteilung: **07.05.2014**
(21) Anmeldenummer: 07002472.4
(22) Anmeldetag: 06.02.2007
(51) Int. Cl.: B32B 27/00, B05D 7/06

(54) **Verfahren zur Kaschierung von Kunststofffolien auf Holzwerkstoffsubstraten, insbesondere zur Erzeugung von Hochglanzoberflächen**
Method for laminating plastic sheets on derived timber substrates, in particular to create high gloss surfaces
Procédé destiné au cachetage de feuilles de plastique sur des substrats de matières premières en bois, en particulier pour la production de surfaces hautement brillantes

(30) Priorität: 17.02.2006 DE 102006007869
(43) Veröffentlichungstag der Anmeldung: 22.08.2007
(73) Patentinhaber: Jowat AG, 32758 Detmold (DE)
(72) Erfinder: Terfloth, Christian, 32760 Detmold (DE); Hippold, Thedor, 32108 Bad Salzuflen (DE)
(74) Vertreter: Von Rohr Patentanwälte Partnerschaft mbB

(56) Entgegenhaltungen:
- EP-A1- 0 704 482
- EP-A2- 0 283 861
- EP-A2- 0 522 240
- US-A1- 2004 209 085

## Beschreibung

Die vorliegende Erfindung betrifft die Verwendung einer Kunststoffolie zur Kaschierung von Kunststoffolien auf Holzwerkstoffsubstraten zu Zwecken der Erzeugung von Hochglanzoberflächen, insbesondere für den Bereich der Holz- und Möbelindustrie, beispielsweise zur Herstellung von Möbeln und Einrichtungsgegenständen aller Art.

Für die Erzeugung von Hochglanzoberflächen auf Holzwerkstoffsubstraten, insbesondere plattenförmigen Holzwerkstoffteilen, wie Massivholzplatten, Spanplatten oder MDF-Platten (MDF = Mitteldichte Faserplatte bzw. Medium Density Fiberboard), insbesondere zu Zwecken der Ausstattung dieser Holzwerkstoffsubstrate mit optisch und/oder haptisch, ein- oder beidseitig verändernden Beschichtungs- und Bedruckungsmaterialien, sind aus dem Stand der Technik unterschiedliche Verfahren bekannt.

Gemäß herkömmlichen Verfahren kann zu diesem Zweck das Holzwerkstoffsubstrat in einem mehrstufigen Arbeitsprozeß unter aufwendigem Beizen, Schleifen und nachfolgendem Lackieren mit einer Hochglanzoberfläche auf Basis einer Lackierung versehen werden.

Insbesondere jedoch bei der Verarbeitung von lösemittelhaltigen Lacken und Druckfarben sind die Emissionen flüchtiger organischer Verbindungen ein zunehmend großes Problem für die Holzwerkstoffbeschichtung. Zudem bedingen die heutzutage eingesetzten Lackier- und Druckverfahren extrem hohe Kosten für Investitionen, Platz, Energie und Bedienung sowie für die Einhaltung der zunehmend produktionsbeschränkenden Emissionsgesetzgebungen.

Eine Alternative zu dem vorgenannten mehrstufigen Beiz-, Schleif- und Lackier- bzw. Bedruckungsverfahren liegt in der Aufbringung einer Versiegelungsschicht auf der entsprechenden Holzwerkstoffoberfläche. So beschreibt beispielsweise die WO 02/094457 A2 ein Verfahren und eine Vorrichtung zur Herstellung von Werkstoffteilen, insbesondere Holzwerkstoffteilen, mit einer Versiegelungsschicht auf der Oberfläche, wobei diese Versiegelungsschicht als eine wasser- und lösemittelfreie, mit der Luftfeuchtigkeit aushärtende Reaktivschmelzklebmasseschicht auf Polyurethanbasis ausgebildet ist, welche nachfolgend mit einer Walze geglättet ist. Nachteilig bei diesem Verfahren ist die nur geringe Variabilität des Dekors. Weiterhin weist die auf diese Weise erzeugte Versiegelungsschicht nicht immer die gewünschte Ebenheit bzw. Glattheit auf. Des weiteren entspricht die auf diese Weise erhaltene Versiegelungsschicht nicht immer den gewünschten Anforderungen, insbesondere im Hinblick auf die geforderte Abriebfestigkeit bzw. Härte. Schließlich erlaubt das in der WO 02/094457 A2 beschriebene Beschichtungsverfahren aufgrund der Verwendung feuchtigkeitsvernetzender reaktiver Polyurethanschmelzklebstoffe als Beschichtungmasse infolge des zunächst thermoplastischen Verhaltens der Beschichtungsmasse nur geringe Vorschubgeschwindigkeiten.

Weiterhin sind aus dem Stand der Technik Verfahren bekannt, bei denen Kunststoffplatten oder Kunststoffolien auf die entsprechenden Holzwerkstoffmaterialien auflaminiert werden. Für diesen Zweck geeignete Kunststoffplatten oder -folien werden beispielsweise von der Senoplast Klepsch & Co. GmbH, Piesendorf, Österreich, vertrieben. Nachteil bei diesem Verfahren ist, daß nur sehr spezielle Kunststoffplatten bzw. -folien zum Einsatz kommen, welche vergleichsweise kostenintensiv sind und nur in einem eingeschränkten Dekorspektrum zur Verfügung stehen, so daß keine beliebige individuelle Dekorgestaltung möglich ist.

So betrifft die EP 0 383 861 eine verklebbare Dekorfolie aus Polycarbonat-Kunststoff, wobei die verklebbare Dekorfolie aus einer klaren ersten Schicht aus Polycarbonat-Kunststoff oder einem Gemisch aus Polycarbonat-Kunststoff und einem anderen, damit verträglichen Kunststoff oder einem schlagzähen PMMA-Kunststoff und einer mit dieser Schicht haftend verbundenen zweiten Schicht aus ABS-Kunststoff besteht, wobei die mit dem ABS-Kunststoff verbundene Seite der ersten Schicht oder eine Oberfläche der Schicht aus ABS-Kunststoff ein Dekor aus einem eindiffundierten Farbstoff trägt.

Des weiteren betrifft die US 2004/0209085 A1 ein Verfahren zum Verkleben von dreidimensionalen Kunststoffextrudaten auf Materialoberflächen.

Die EP 0 704 482 A1 betrifft eine polyolefinbasierte Kunststoffolie für Möbel oder Möbelteile, welche gegebenenfalls Additive, wie Pigmente, Farbstoffe, Verarbeitungshilfsmittel, Füllstoffe oder dergleichen, enthält.

Zudem betrifft die EP 0 522 240 A2 eine mehrschichtige Kunststoffverbundfolie, ein Verfahren zu ihrer Herstellung sowie ihre Verwendung, wobei die mehrschichtige Kunststoffverbundfolie mindestens eine 60 bis 700 µm dicke, füllstoffhaltige polyolefinhaltige Unterschicht oder Unterfolie, mindestens eine Zwischenschicht in Form mindestens einer Primer-, Haftschicht- oder Haftfolie und darüber mindestens eine vollflächig oder teilflächig angeordnete Druckschicht, Farbschicht oder Farbdruckschicht und unmittelbar darauf oder über eine oder mehrere Zwischenschichten mindestens eine ein- oder mehrschichtige Schutzschicht oder Schutzfolie mit mindestens einem UV-Absorber oder UV-Stabilisator enthält, wobei unterhalb der Unterfolie eine Haftschicht, Haftfolie, Haftvermittlerschicht oder Reaktantschicht angeordnet ist.

Der vorliegenden Erfindung liegt daher die Aufgabe zugrunde, ein Verfahren bzw. eine Verwendung bereitzustellen, welches bzw. welche sich zur Kaschierung bzw. Laminierung von Kunststoffolien auf Holzwerkstoffsubstraten zur Erzeugung von Hochglanzoberflächen auf Holzwerkstoffsubstraten, eignet und dabei insbesondere die zuvor geschilderten Nachteile des Standes der Technik zumindest weitgehend vermeidet oder aber wenigstens abschwächt.

Eine weitere Aufgabe der vorliegenden Erfindung ist die Bereitstellung eines Verfahrens bzw. einer Verwendung zum Beschichten bzw. Kaschieren (Laminieren) von Holzwerkstoffen bzw. Holzwerkstoffsubstraten, nämlich plattenförmigen Holzwerkstoffen, wie Massivholzplatten, Spanplatten, MDF-Platten und dergleichen, mit Kunststoffolien zu Zwecken der Erzeugung von Hochglanzoberflächen auf Holzwerkstoffen bzw. Holzwerkstoffsubstraten, wobei ein solches Verfahren bzw. eine solche Verwendung - im Vergleich zu den Verfahren des Standes der Technik - in hohem Maße investitions-, energie- und/oder anwendungs(kosten)günstiger sowie qualitäts- und/oder leistungsfähiger und flexibler in der Anwendung sein soll, weitestgehend emissionsfrei arbeiten und damit umweltverträglich sein soll und auf diese Weise den Produzenten von Gegenständen insbesondere aus beschichteten Holzwerkstoffen neue innovative Gestaltungsmöglichkeiten für die Beschichtungen mit Kunststoffolien ermöglichen soll.

Zielrichtung der vorliegenden Erfindung ist somit zum einen die Vermeidung bzw. der Ersatz aufwendiger Beiz-, Schleif- und Lackierverfahren durch eine relativ einfach zu handhabende Folienkaschierung und zum anderen die Erzeugung von Hochglanzoberflächen auf Holzwerkstoffen bzw. Holzwerkstoffsubstraten.

Zur Lösung des geschilderten Problems schlägt die vorliegende Erfindung die Verwendung einer Kunststoffolie zur Erzeugung einer Hochglanzoberfläche auf einem Holzwerkstoffsubstrat mittels Kaschierung gemäß Anspruch 1 vor; weitere vorteilhafte Ausgestaltungen sind Gegenstand der diesbezüglichen Unteransprüche.

Gegenstand der vorliegenden Erfindung ist somit die Verwendung einer Kunststoffolie zur Erzeugung einer Hochglanzoberfläche auf einem Holzwerkstoffsubstrat mittels Kaschierung der Kunststoffolie auf dem Holzwerkstoffsubstrat, wobei eine an ihrer Oberseite transparent ausgebildete Kunststoffolie mit einer Dicke von 0,005 bis 15 mm, welche an ihrer Oberseite einen Glanzwert gemäß DIN 67530 bei einem Meßwinkel von 60° von mindestens 100 aufweist, mittels eines Kaschiermittels in Form eines transparenten, lösemittelfreien, extrudierbaren sowie filmbildenden, vollflächig und mit gleichmäßiger Schichtdicke aufgetragenen Schmelzklebstoffs auf ein plattenförmiges und/oder flächiges Holzwerkstoffsubstrat aufkaschiert und dauerhaft und vollflächig mit dem Holzwerkstoffsubstrat verbunden wird, so daß ein Holzwerkstoffsubstrat mit einer Hochglanzoberfläche resultiert.

Im allgemeinen wird die erfindungsgemäße Verwendung bzw. die Kaschierung (Laminierung) derart durchgeführt, daß eine Hochglanzoberfläche auf dem Holzwerkstoffsubstrat erzeugt wird.

Unter dem Begriff des Kaschierens - gelegentlich im Rahmen der vorliegenden Erfindung synonym auch als Laminierung bezeichnet - wird im Rahmen der vorliegenden Erfindung insbesondere das Verbinden von zwei oder mehreren Lagen (d. h. im Rahmen der vorliegenden Erfindung konkret das Verbinden der Kunststoffolien mit Holzwerkstoffsubstraten) mit Hilfe eines geeigneten Kaschiermittels - synonym auch als Verbindungsmittel bezeichnet - verstanden, wobei als Kaschiermittel erfindungsgemäß geeignete Klebstoffe zum Einsatz kommen, wie nachfolgend noch beschrieben wird. Zu weitergehenden Einzelheiten zu den Begriffen des Kaschierens und Laminierens kann beispielsweise verwiesen werden auf Römpp Chemielexikon, 10. Auflage, Band 3, 1997, Georg Thieme Verlag Stuttgart/New York, Seite 2088, Stichwort: "Kaschieren", und Seite 2339, Stichwort: "Laminate", deren gesamter Inhalt einschließlich des Inhalts der dort jeweils referierten Literaturstellen hiermit durch Bezugnahme eingeschlossen ist.

Wie zuvor beschrieben, ist die erfindungsgemäß eingesetzte Kunststoffolie an ihrer Oberseite transparent ausgebildet. Unter dem Begriff der Oberseite ist die von dem Holzwerkstoffsubstrat abgewandte Seite, also sozusagen die Außenseite der Kunststoffolie zu verstehen (wohingegen die Innenseite der Kunststoffolie - synonym auch als Rückseite bezeichnet - mit dem Holzwerkstoffsubstrat verbunden bzw. verklebt ist).

Der Begriff der Transparenz wird im Hinblick auf die erfindungsgemäße Kunststoffolie in dem Sinn verwendet, wie er üblicherweise verstanden wird, und bezeichnet insbesondere die Eigenschaft der Folie, daß durch die Folie hindurchgesehen werden kann, insbesondere auf die Oberfläche des unterliegenden Holzwerkstoffsubstrats bzw. im Fall einer rückseitigen Bedruckung auf diese Bedruckung, d. h. der Begriff der Transparenz bezeichnet im Rahmen der vorliegenden Erfindung anschaulich die visuell wahrnehmbare Durchsichtigkeit bzw. Lichtdurchlässigkeit der Kunststoffolie. Insbesondere wird unter dem Begriff der Transparenz erfindungsgemäß - der in verwandtem Sinne als Transmission definierte - Quotient φₑₓ/φᵢₙ bezeichnet, dessen Kehrwert als Opazität bezeichnet wird und als Maß für die optische Dichte gilt, die z. B. mit Densitometern bestimmt werden kann. Insbesondere kennzeichnet der Begriff der Transparenz der erfindungsgemäß eingesetzten Folie das Maß der Lichtdurchlässigkeit (vgl. hierzu auch Römpp Chemielexikon, 10. Auflage, Band 6, 1999, Georg Thieme Verlag Stuttgart/New York, Seite 4612, Stichwort: "Transparenz"). Anschaulich gesprochen, wird eine Kunststoffolie als solche bzw. insgesamt dann als transparent bezeichnet, wenn bei visueller Prüfung bzw. Augenscheinnahme quasi durch sie hindurchgeschaut durchgeschaut werden kann und dahinterliegende Objekte (z. B. eine Schrift mit Buchstaben oder eine farbige Lackierung) für das menschliche Auge erkennbar ist. Jedoch bezieht sich die erfindungsgemäß geforderte Eigenschaft der Transparenz der Kunststoffolie nur auf deren Ober- bzw. Außenseite, da die mit dem Holzwerkstoffträger verbundene Rückseite der Kunststoffolie gegebenenfalls bedruckt oder farbig lackiert sein kann (z. B. zur Erzielung spezieller optischer Effekte). Bei Ausfiihrungsformen, bei denen keine rückseitige Bedruckung oder Farblackierung vorgesehen ist, kann selbstverständlich eine insgesamt transparente Kunststoffolie mit den zuvor genannten Transparenzeigenschaften zum Einsatz kommen.

Insbesondere wird im Rahmen der vorliegenden Erfindung unter einer transparenten Kunststoffolie eine Kunststoffolie mit einer Transparenz nach ASTM D 1003-61, Methode A, von mindestens 70 %, vorzugsweise mindestens 80 %, besonders bevorzugt mindestens 85 %, ganz besonders bevorzugt mindestens 90 %, verstanden. Entsprechend sollte die Opazität bzw. Trübung der erfindungsgemäß eingesetzten Kunststoffolie gemäß ASTM D 1003-61, Methode A, unterhalb von 30 %, vorzugsweise unterhalb von 20 %, besonders bevorzugt unterhalb von 15 %, ganz besonders bevorzugt 10 %, liegen. Die vorgenannten Transparenz- bzw. Opazitätswerte beziehen sich auf die Oberseite der erfindungsgemäß eingesetzten Kunststoffolie, da die mit dem Holzwerkstoffträger verbundene Rückseite der Kunststoffolie gegebenenfalls bedruckt oder farbig lackiert sein kann (z. B. zur Erzielung spezieller optischer Effekte). Bei Ausführungsformen, bei denen keine rückseitige Bedruckung oder Farblackierung vorgesehen ist, kann eine insgesamt transparente Kunststoffolie verwendet werden, welche insgesamt bzw. also solche die vorgenannten Transparenz- bzw. Opazitätsparameter erfüllt.

Erfindungsgemäß wird zunächst die Kunststoffolie und/oder das Holzwerkstoffsubstrat, vorzugsweise nur die Kunststoffolie, mit dem Kaschiermittel beaufschlagt, und anschließend werden die Kunststoffolie und das Holzwerkstoffsubstrat zusammengebracht bzw. zusammengefügt derart, daß die Kunststoffolie dauerhaft und vollflächig mit dem Holzwerkstoffsubstrat verbunden wird bzw. die Kunststoffolie vollflächig auf das Holzwerkstoffsubstrat aufkaschiert bzw. auflaminiert wird.

Die Beaufschlagung der Kunststoffolie und/oder des Holzwerkstoffsubstrats, vorzugsweise nur der Kunststoffolie, mit dem Kaschiermittel, nämlich dem Klebstoff, erfolgt vollflächig (d. h. mit kontinuierlichem Schichtauftrag des Kaschiermittels) und homogen, also mit gleichmäßiger Schichtdicke. Auf diese Weise wird ein sicherer Verbund zwischen Kunststoffolie einerseits und Holzwerkstoffsubstrat andererseits, insbesondere auch in Verbindung mit guten optischen Eigenschaften, gewährleistet. Insbesondere gewährleistet der vollflächige und homogene Kaschiermittel- bzw. Klebstoffauftrag eine ganzheitliche bzw. vollflächige, über alle Flächenbereiche gute und blasenfrei ausgebildete Verbindung zwischen Kunststoffolie einerseits und Holzwerkstoffsubstrat andererseits. Der Auftrag des Kaschiermittels bzw. Klebstoffs auf das Holzwerkstoffsubstrat sollte - ebenso wie das gesamte Laminat - zumindest im wesentlichen frei von Lufteinschlüssen, insbesondere Blasen, sein, da ansonsten eine optische Vergrauung und damit eine Beeinträchtigung der Hochglanzoberfläche resultieren würde.

Im allgemeinen wird erfindungsgemäß derart verfahren, daß das Zusammenführen von Kunststoffolie und Holzwerkstoffsubstrat nach Beaufschlagung von Kunststoffolie und/oder Holzwerkstoffsubstrat, vorzugsweise nur der Kunststoffolie, mit dem Kaschiermittel bzw. Klebstoff unter Druck und/oder Anpressen erfolgt. Dies kann beispielsweise mittels Rollen, Walzen, Kalandern und dergleichen, vorzugsweise mit Kalandern, erfolgen.

Gemäß einer besonderen Ausführungsform der vorliegenden Erfindung kann erfindungsgemäß mit einer Kaschiervorrichtung verfahren werden, wie sie in der DE 198 17 835 A1 beschrieben ist, deren gesamter diesbezüglicher Offenbarungsgehalt hiermit durch Bezugnahme eingeschlossen ist.

Vorteilhafterweise erfolgt das Zusammenführen von Kunststoffolie und Holzwerkstoffsubstrat unter Erwärmen, insbesondere oberhalb des Schmelz- oder Erweichungsbereiches des Kaschiermittels bzw. des Klebstoffs. Gemäß einer besonders bevorzugten Ausführungsform wird dabei die Kunststoffolie zunächst mit einem geeigneten Kaschiermittel, d. h. dem Schmelzklebstoff, beaufschlagt und dann mit dem zu beschichtenden Holzwerkstoffsubstrat zusammengeführt. Üblicherweise kann der Schmelzklebstoff vor und/oder während des Zusammenführens von Klebstoffolie und Holzwerkstoffsubstrat oberhalb seiner Schmelz- bzw. Erweichungstemperatur erhitzt werden, so daß eine sichere Klebeverbindung zwischen Kunststoffolie einerseits und Holzwerkstoffsubstrat andererseits gewährleistet ist.

Die Beaufschlagung bzw. Beschichtung des Holzwerkstoffsubstrats mit der Kunststoffolie kann grundsätzlich auf einer oder beiden Seiten des Holzwerkstoffsubstrats erfolgen, wobei die Beaufschlagung auf nur einer Seite bevorzugt ist. Grundsätzlich kann jedoch erfindungsgemäß eine ein- oder beidseitige Beaufschlagung bzw. Beschichtung des Holzwerkstoffsubstrats mit der Kunststoffolie vorgesehen sein. So können beispielsweise beide Flächenseiten eines Holzwerkstoffsubstrats, beispielsweise einer Massivholzplatte, einer Spanplatte oder einer MDF-Platte, erfindungsgemäß mit der Kunststoffolie oder aber auch nur eine dieser beiden Flächenseiten hiermit beaufschlagt werden, je nach gewünschter Verwendung.

Gemäß einer besonders bevorzugten Ausführungsform kann die erfindungsgemäße Verwendung kontinuierlich, insbesondere automatisiert, durchgeführt werden. Zu diesem Zweck können die Kunststoffolie und das mit der Kunststoffolie zu beaufschlagende bzw. zu verbindende Holzwerkstoffsubstrat nach dem Auftrag des Kaschiermittels bzw. des Klebstoffs kontinuierlich zusammengeführt werden, üblicherweise mittels kontinuierlich bewegter Transportvorrichtungen, welche die Kunststoffolie einerseits und das Holzwerkstoffsubstrat andererseits kontinuierlich fortbewegen und kontinuierlich zusammenführen und verbinden bzw. kaschieren.

Wie zuvor beschrieben, erfolgt die Beaufschlagung der Kunststoffolie und/oder des Holzwerkstoffsubstrats, vorzugsweise nur der Kunststoffolie, mit Kaschiermittel bzw. mit Klebstoff vollständig und/oder homogen, insbesondere mit gleichmäßiger Schichtdicke. Auf diese Weise wird über die gesamte Fläche ein sicherer Klebstoffverbund gewährleistet. Vorteilhafterweise sollte das Kaschiermittel bzw. der Klebstoff derart ausgewählt werden, insbesondere im Hinblick auf die Auftragsmenge und/oder die Verarbeitungseigenschaften, insbesondere die Viskosität, daß einerseits ein sicherer Verbund zwischen Kunststoffolie und Holzwerkstoffsubstrat resultiert und andererseits eine ebene Oberflächenstruktur des unterliegenden Holzwerkstoffsubstrats erreicht wird (Die Holzwerkstoffoberfläche, die von Natur aus relativ rauh ist, muß mit Hilfe des Kaschiermittels sozusagen geglättet bzw. geebnet werden.).

Für die erfindungsgemäße Durchführung, insbesondere bei kontinuierlichem und/oder automatisiertem Betrieb, kann es vorteilhaft ist, wenn die Kunststoffolie bahnförmig ausgebildet ist. Auf diese Weise kann die Kunststoffolie dann kontinuierlich mit dem zu beaufschlagenden Werkstoffsubstrat zusammengeführt und verbunden bzw. kaschiert werden.

Als Kunststoffolien können erfindungsgemäß sowohl einschichtige als auch mehrschichtige Kunststoffolien eingesetzt werden. Im Falle mehrschichtiger Kunststoffolien kann beispielsweise ein Laminat oder Koextrudat aus mindestens zwei Kunststoffolien eingesetzt werden. Das Kunststoffolienlaminat oder -koextrudat kann auf Basis gleicher oder vorzugsweise verschiedener Kunststoffolien ausgebildet sein (d. h. auf Basis von Kunststoffolien, die aus identischen oder vorzugsweise unterschiedlichen Materialien ausgebildet sind).

Beispielsweise können im Fall mehrschichtig ausgebildeter Kunststoffolien die einzelnen Folien bzw. Schichten unterschiedliche Härten aufweisen: So kann vorteilhafterweise die Oberseite bzw. Außenfolie als eine relativ harte, kratzfeste Folie ausgebildet sein, während die Rückseite bzw. Innenfolie als eine relativ weiche, plastisch verformbare Folie zur besseren optischen Glättung der rauhen Holzwerkstoffoberfläche und zur besseren Haftung hierauf ausgebildet sein kann.

Im Rahmen der erfindungsgemäßen Verwendung können grundsätzlich unlackierte wie lackierte Kunststoffolien eingesetzt werden. An ihrer Ober- bzw. Außenseite lackierte, insbesondere mit einem Hochglanzklarlack versehene Kunststoffolien können beispielsweise dann eingesetzt werden, wenn besondere Hochglanzeffekte erreicht werden sollen, die über die Glanzeffekte der eigentlichen Kunststoffolie als solche noch hinausgehen sollen, insbesondere wenn der Oberflächenglanz noch gesteigert werden soll.

Erfindungsgemäß können grundsätzlich bedruckte wie unbedruckte Kunststoffolien eingesetzt werden. Insbesondere zur Erreichung spezieller optischer Effekte können rückseitig bedruckte Kunststoffolien eingesetzt werden; nach dem Kaschiervorgang sind diese Bedruckungen dann aufgrund der Transparenz der Oberseite der Kunststoffolie als optisches Dekor sichtbar, sofern eine farbige Rückseitenbedruckung gewählt wird.

Als Kunststoffolienmaterialien können somit eine Vielzahl von Polymerarten ausgewählt werden. Dabei spielen die späteren Gebrauchseigenschaften eine wesentliche Rolle: Liegen hohe Anforderungen an thermische Beständigkeit, Kratzfestigkeit und optische Transparenz vor, dann können insbesondere Polyesterfolien, insbesondere auf Basis von Polyethylenterephthalat, eingesetzt werden. Entsprechende Kunststoffolien mit geeigneten Schichtstärken sind sowohl als Mono- als auch als Koextrudate beispielsweise von der Firma Mitsubishi Polyester Film GmbH, Wiesbaden, Deutschland, erhältlich (z. B. die Produktserien "Hostaphan^{®}" und "Diafoil^{®}").

Was das Material der Kunststoffolie anbelangt, so können grundsätzlich Kunststoffolien auf Basis von Polyolefinen, wie Polyethylen und Polypropylen; Polyestern, insbesondere Polyethylenterephthalaten (PET); Poly(meth)acrylaten; Polystyrolen; und/oder Acetaten zum Einsatz kommen. Im Fall der Verwendung eines Verbunds bzw. Laminats oder Koextrudats aus mindestens zwei Kunststoffolien können auch verschiedene der vorgenannten Materialien miteinander kombiniert werden.

Erfindungsgemäß werden Kunststoffolien mit Dicken im Bereich von 0,005 bis 15 mm, insbesondere 0,01 bis 10 mm, vorzugsweise 0,05 bis 5,0 mm, besonders bevorzugt 0,075 bis 3,0 mm, eingesetzt. Die vorgenannten Untergrenzen erklären sich aufgrund der Tatsache, daß eine gewisse mechanische Stabilität der eingesetzten Kunststoffolien vorausgesetzt wird. Die vorgenannten Obergrenzen wiederum erklären sich einerseits durch eine gewisse geforderte Flexibilität und andererseits durch eine gute Verarbeitbarkeit und Transparenz.

Um den mechanischen Anforderungen des Kaschiervorgangs und der nachfolgenden Beschichtung in besonderem Maße standhalten zu können, werden vorteilhaft gereckte, insbesondere uniaxial, vorzugsweise biaxial (d. h. in Längs- und Querrichtung) gereckte Kunststoffolien eingesetzt.

Die Zugfestigkeit (ISO 527-1-2; Prüfbedingungen: Prüfgeschwindigkeit 100 %/min; 23 °C; 50 % rel. Feuchte) der eingesetzten Kunststoffolien sollte in Längs- und Querrichtung mindestens 100 N/mm², insbesondere mindestens 120 N/mm², vorzugsweise mindestens 140 N/mm², betragen. Weiterhin sollte die Zugfestigkeit in mindestens eine Richtung, vorzugsweise in Querrichtung, mindestens 180 N/mm², insbesondere mindestens 190 N/mm², vorzugsweise mindestens 200 N/mm², betragen. Auf diese Weise werden gute Verarbeitungs- und Anwendungseigenschaften erreicht.

Für eine weitergehende Optimierung der Verarbeitungs- und Anwendungseigenschaften sollte der Elastizitätsmodul (ISO 527-1-2; Prüfbedingungen: Prüfgeschwindigkeit 100 %/min; 23 °C; 50 % rel. Feuchte) der eingesetzten Kunststoffolien in Längs- und Querrichtung mindestens 3.000 N/mm², insbesondere mindestens 3.200 N/mm², vorzugsweise mindestens 3.500 N/mm², betragen. Weiterhin sollte der Elastizitätsmodul in mindestens eine Richtung, vorzugsweise in Querrichtung, mindestens 4.000 N/mm², insbesondere mindestens 4.500 N/mm², vorzugsweise mindestens 5.000 N/mm², betragen.

Des weiteren sollte die Reißdehnung (ISO 527-1-2; Prüfbedingungen: Prüfgeschwindigkeit 100 %/min; 23 °C; 50 % rel. Feuchte) der eingesetzten Kunststoffolien in Längs- und Querrichtung mindestens 90 %, insbesondere mindestens 100 %, vorzugsweise mindestens 110 %, betragen. Weiterhin sollte die Reißdehnung in mindestens eine Richtung, vorzugsweise in Längsrichtung, mindestens 180 %, insbesondere mindestens 190 %, vorzugsweise mindestens 200 %, betragen.

Für die Erzielung guter Hochglanzeigenschaften weisen die erfindungsgemäß eingesetzten Kunststoffolie an ihrer Ober- bzw. Außenseite (d. h. genauer gesagt, an der Oberfläche ihrer Ober- bzw. Außenseite) einen Glanz (bestimmt nach DIN 67530, Meßwinkel 60°) von mindestens 100, insbesondere mindestens 120, vorzugsweise mindestens 140, besonders bevorzugt mindestens 150, auf. Insbesondere sollte der Glanzwert (bestimmt nach DIN 67530, Meßwinkel 60°) im Bereich von 100 bis 200, vorzugsweise 120 bis 180, insbesondere 140 bis 160, liegen.

Weiter sollte für Erzielung guter optischer wie haptischer Eigenschaften die Rauhigkeit Ra (DIN 4762; "Cut-off": 0,25 mm) höchstens 60 nm, insbesondere höchstens 50 nm, vorzugsweise höchstens 45 nm, betragen und insbesondere im Bereich von 10 bis 60 nm, vorzugsweise 25 bis 50 nm, liegen.

Was die erfindungsgemäß eingesetzten Holzwerkstoffsubstrate anbelangt, so können grundsätzlich beliebige plattenförmige und/oder flächige Holzwerkstoffe bzw. -substrate zum Einsatz kommen. Bevorzugt werden plattenförmige und/oder flächige Holzwerkstoffsubstrate, wie Massivholzplatten, Spanplatten, MDF-Platten oder dergleichen, eingesetzt. Ebenfalls geeignet sind Furniere und sogenannte Leichtbau- bzw. Wabenplatten.

Die Holzwerkstoffsubstrate sind grundsätzlich von ihrer Dimensionierung her nicht begrenzt. Vorteilhafterweise werden jedoch Holzwerkstoffsubstrate insbesondere mit Stärken bzw. Dicken von 0,1 bis 150 mm, vorzugsweise 0,3 bis 120 mm, eingesetzt.

Als Holzwerkstoffsubstrate können somit nahezu beliebige flächige Holzwerkstoffe zum Einsatz kommen, insbesondere eine Vielzahl von technisch relevanten Materialien, wie z. B. die vorgenannten Platten aus Massivholz, Spanplatten und MDF-Platten oder Furniere sowie Leichtbauplatten bzw. Wabenplatten. Diese Platten können gegebenenfalls selbst auch lackiert oder beschichtet sein, wobei es sich bei diesen Beschichtungen beispielsweise um Furniere, um Dekorpapiere oder auch um Melaminharzlaminate handeln kann. Auch können als Holzwerkstoffsubstrate sogenannte CPL-beschichteten oder HPL-beschichteten Platten zum Einsatz kommen (CPL = Continuous Pressure Laminate bzw. HPL = High Pressure Laminate). Wie zuvor beschrieben, kann die Stärke der flächigen Holzwerkstoffe in einem weiten Bereich variieren: So können dünne Furniere mit einer Stärke von ca. 0,1 mm bis hin zu beispielsweise Küchenarbeitsplatten mit einer Stärke von ca. 150 mm in einem erfindungsgemäßen Durchlaufverfahren mit einer Hochglanzoberfläche versehen werden. Wie zuvor beschrieben, können aber auch Holzprofile zum Einsatz kommen.

Was das erfindungsgemäß eingesetzte Kaschiermittel, nämlich den Klebstoff, anbelangt, so wird dieses - zur Gewährleistung eines sicheren Verbunds zwischen Kunststoffolie einerseits und Holzwerkstoffsubstrat andererseits bei gleichzeitig guten Verarbeitungseigenschaften und guten optischen Eigenschaften etc. - im allgemeinen in einer Menge von 0,1 bis 200 g/m², vorzugsweise 0,5 bis 100 g/m², vorzugsweise 1 bis 50 g/m², eingesetzt bzw. aufgetragen. Zu diesem Zweck werden üblicherweise, je nach Kaschiermittel bzw. Klebstoff, Schichtdicken des Kaschiermittels bzw. Klebstoffs von 1 bis 1.000 µm, vorzugsweise 1 bis 500 µm, besonders bevorzugt 5 bis 250 µm, besonders bevorzugt 25 bis 150 µm, aufgetragen.

Wie zuvor beschrieben, erfolgt der Auftrag des Kaschiermittels, nämlich des Klebstoffs, üblicherweise unter Erwärmen, im allgemeinen unter Aufschmelzen des Kaschiermittels, vorzugsweise bei Temperaturen im Bereich von 80 bis 200 °C, insbesondere 90 bis 170 °C.

Der Auftrag des Klebstoffs kann dabei auf beliebige Weise erfolgen, beispielsweise mittels Düsen, Sprühvorrichtungen, Rakeln, Walzen und dergleichen. Vorzugsweise erfolgt der Klebstoffauftrag mittels Düsenauftrag, beispielsweise durch Schlitzdüsen. Dabei können sowohl Kontaktverfahren zum Einsatz kommen, bei denen die Düsenlippe mit dem mit Klebstoff zu beaufschlagenden Material in Kontakt steht, oder aber sogenannte Nichtkontaktverfahren, bei denen die Düsenlippe von dem mit Klebstoff zu beaufschlagenden Material beabstandet ist (z. B. im allgemeinen etwa 1 bis 5 mm). Falls die Klebstoffbeschichtung im kontaktlosen Auftrag erfolgt (z. B. gemäß der Technologie der DE 198 17 835 A1), sollte ein extrudierbarer und/oder filmbildender Schmelzklebstoff verwendet werden. Wie zuvor beschrieben, kann der Klebstoffauftrag alternativ bevorzugt über eine Schlitzdüse im Kontaktverfahren erfolgen. Technologisch möglich, aber wegen der größeren Gefahr des Eintrags von Verunreinigungen weniger bevorzugt ist dagegen die Verwendung eines Walzenauftragsverfahrens.

Als Kaschiermittel wird erfindungsgemäß ein lösemittelfreier Klebstoff in Form eines Schmelzklebstoffs ("Hotmelt") eingesetzt. Hierbei handelt es sich insbesondere um bei Raumtemperatur feste, wasser- und lösemittelfreie Klebstoffe, welche auf die zu verklebenden Materialien aus der Schmelze aufgetragen werden und nach dem Zusammenfügen beim Abkühlen unter Verfestigung physikalisch und/oder chemisch abbinden. Für weitere Einzelheiten zum Begriff des Schmelzklebstoffs kann beispielsweise verwiesen werden auf Römpp Chemielexikon, 10. Auflage, Band 5, 1998, Georg Thieme Verlag Stuttgart/New York, Seite 3975, Stichwort: "Schmelzklebstoffe", wobei der gesamte Offenbarungsgehalt einschließlich der dort referierten Literaturstellen hiermit durch Bezugnahme eingeschlossen ist.

Als erfindungsgemäße Kaschiermittel geeignete Schmelzklebstoffe sind transparent bzw. farblos ausgebildet (zum Begriff der Transparenz vgl. obige Ausführungen). Auf diese Weise werden die durch die Kunststoffolienkaschierung erreichten optischen Effekte nicht beeinträchtigt. Weiterhin sollte der eingesetzte Klebstoff, genau genommen der Schmelzklebstoff, oxidations- bzw. farbstabil, insbesondere UVstabilisiert und/oder vergilbungsresistent, ausgebildet sein, damit keine optisch unerwünschten Langzeiteffekte auftreten.

Als erfindungsgemäß geeignete Schmelzklebstoffe können, je nach Anforderungen, insbesondere Schmelzklebstoffe in thermoplastischer und/oder reaktiver Qualität eingesetzt werden.

Die eingesetzten Klebstoffe in Form von Schmelzklebstoffen werden insbesondere in Abhängigkeit von den zu verklebenden Materialien und den diesbezüglichen Anforderungen, beispielsweise einer geforderten Temperatur- bzw. Hitzebeständigkeit der Verklebung etc., ausgewählt.

Als thermoplastische Schmelzklebstoffe können insbesondere solche auf Basis von Ethylen/Vinylacetaten (EVA), Polyolefinen (z. B. amorphen Poly-α-olefinen oder metallocenkatalytisch hergestellten Polyolefinen), Polyacrylaten, Copolyamiden, Copolyestern und/oder thermoplastischen Polyurethanen bzw. entsprechenden Co- und/oder Terpolymeren eingesetzt werden.

Als Schmelzklebstoffe können beispielsweise reaktive Schmelzklebstoffe, insbesondere feuchtigkeitsvernetzende und/oder strahlenvernetzende, insbesondere UV-vernetzende, Schmelzklebstoffe, eingesetzt werden. Beispiele für erfindungsgemäß geeignete reaktive Schmelzklebstoffe sind Schmelzklebstoffe auf Basis von isocyanatterminierten Polyurethanen und auf Basis von silangepfropften amorphen Poly-α-olefinen, besonders bevorzugt Schmelzklebstoffe auf Basis von isocyanatterminierten Polyurethanen.

Alternativ können als Schmelzklebstoffe reaktive Schmelzklebstoffe auf Basis strahlenvernetzender reaktiver Schmelzklebstoffe, insbesondere unter UV-Bestrahlung vernetzender Schmelzklebstoffe, eingesetzt werden.

Weiterhin können als reaktive, beispielsweise feuchtigkeitsvernetzende Schmelzklebstoffe erfindungsgemäß insbesondere solche auf Basis von silangepfropften amorphen Poly-α-olefinen, silangepfropften metallocenkatalytisch hergestellten Polyolefinen (z. B. EP 1 508 579 A1) oder isocyanatterminierten Polyurethanen zum Einsatz kommen. Bei den reaktiven Schmelzklebstoffen führt die nachfolgende Vernetzung beispielsweise mit Feuchtigkeit zu temperatur- bzw. hitzebeständigen Verklebungen. Reaktive Schmelzklebstoffe kombinieren somit die Vorteile der schnellen Anfangsfestigkeit durch den physikalischen Abbindevorgangs des Abkühlens mit einer nachfolgend stattfindenden chemischen Vernetzung. Bei der Verarbeitung feuchtigkeitsreaktiver Schmelzklebstoffe sollte die Schmelze vor ihrer Applikation vor Feuchtigkeit geschützt werden.

Beispielsweise können für die Kaschierung von Spanplatten oder MDF-Platten mit Polyesterfolien, entweder unbedruckt oder in rückseitig bedruckter Form, in Kombination mit einer hohen Temperaturbeständigkeit des Verbunds beispielsweise Schmelzklebstoffe auf Basis von isocyanatterminierten Polyurethanen verwendet werden.

Polymere für im Rahmen der vorliegenden Erfindung gleichermaßen geeignete, reaktive feuchtigkeitsvernetzende Schmelzklebstoffe sind beispielsweise die im Handel unter der Produktbezeichnung "Vestoplast^{®} 206" von der Degussa AG, Marl, Deutschland, erhältlichen silanmodifizierten Poly-α-olefine. Erfindungsgemäß besonders bevorzugt sind silanmodifizierte Poly-α-olefine mit zahlenmittleren Molekulargewichten Mₙ von 5.000 bis 25.000 g/mol, vorzugsweise 10.000 bis 20.000 g/mol.

Weitere, erfindungsgemäß geeignete reaktive Schmelzklebstoffe umfassen - wie zuvor beschrieben - beispielsweise strahlenvernetzende reaktive Schmelzklebstoffe (z. B. reaktive Schmelzklebstoffe, die unter UV-Bestrahlung vernetzen). Geeignete strahlenvernetzende Schmelzklebstoffe sind z. B. UV-vernetzbare Schmelzklebstoffe, insbesondere auf Basis von (Meth-)Acrylatpolymeren und -copolymeren oder acrylierten Polyestern und/oder Polyurethanen, vorzugsweise UV-vernetzbare Schmelzklebstoffe auf Basis von Acrylatcopolymeren, wie sie beispielsweise von der BASF AG, Ludwigshafen, Deutschland, unter der Bezeichnung "acResin^{®}", z. B. "acResin^{®} A 203 UV", vertrieben werden. Im Falle UV-vernetzender Schmelzklebstoffe wird der eingesetzten Klebstoffinischung im allgemeinen ein Photoinitiator zugesetzt; dieser kann der Klebstoffmischung entweder als separater Photoinitiator zugesetzt sein oder aber Bestandteil des UV-vernetzbaren Schmelzklebstoffs selbst sein, insbesondere in dem UV-reaktiven Polymer (z. B. UV-reaktives Acrylatcopolymer mit photoreaktiven Gruppen) enthalten sein (z. B. in Form von chemisch eingebauten photoreaktiven Gruppen, die an das UV-reaktive Polymer gebunden sind, wie dies z. B. bei dem vorgenannten Produkt "acResin^{®} A 203 UV" der BASF AG, Ludwigshafen, Deutschland der Fall ist). Durch die Bestrahlungs- bzw. Vernetzungsdauern, -intensitäten, -energien, -wellenlängen etc. lassen sich die Eigenschaften der Klebeverbindung gezielt steuern (z. B. Scherfestigkeiten etc.). Wie nachfolgend noch im Detail beschrieben, können zur Steuerung der offenen Zeit und/oder der Adhäsionseigenschaften der strahlenvernetzenden, insbesondere UVvemetzenden reaktiven Schmelzklebstoffe Additive auf Basis nichtreaktiver Polymere, Harze und/oder Wachse zugesetzt sein, so z. B. gegebenenfalls hydrierte Kolophoniumharzester und aliphatische Kohlenwasserstoffharze. Eine erfindungsgemäß besonders geeignete Beispielrezeptur für ein UVvernetzendes reaktives Schmelzklebstoffsystem umfaßt z. B. 90 Gew.-% UV-reaktives Acrylsäureester-Copolymer (z. B. acResin^{®} A 203 UV der BASF AG) und 10 Gew.-% aliphatische Kohlenwasserstoffharze (z. B. Escorez^{®} 1310, Exxon Mobil).

Der Auftrag des Klebstoffs auf die Kunststoffolie und/oder das Holzwerkstoffsubstrat, vorzugsweise ausschließlich auf die Kunststoffolie, kann in weiten Temperaturbereichen erfolgen. Wie zuvor beschrieben, werden im allgemeinen Verarbeitungstemperaturen im Bereich von 80 °C bis 200 °C, vorzugsweise 90 °C bis 170 °C, gewählt.

Um eine gute Auftragbarkeit des Schmelzklebstoffs zu erreichen, werden üblicherweise solche Schmelzklebstoffe verwendet, welche bei den Verarbeitungstemperaturen, im allgemeinen 80 °C bis 200 °C, Brookfield-Viskositäten im Bereich von im allgemeinen 50 bis 1.000.000 mPa·s aufweisen.

Beispielsweise können in erfindungsgemäß bevorzugter Weise reaktive Schmelzklebstoffe auf Basis von silangepfropften Polyolefinen, insbesondere silangepfropften Poly-α-olefinen, eingesetzt werden, welche bei 180 °C Brookfield-Viskositäten im Bereich von 50 bis 50.000 mPa·s, insbesondere 1.000 bis 10.000 mPa·s, vorzugsweise 5.000 bis 8.000 mPa·s, besonders bevorzugt 5.500 bis 7.500 mPa·s, aufweisen.

Zur Steuerung der Reaktivität und des Vernetzungsverhaltens können den reaktiven Schmelzklebstoffen üblicherweise die für diese Zwecke an sich gängigen Katalysatoren zugesetzt sein, so z. B. Dibutylzinndilaurat (DBTL), und dies in den für diese Zwecke an sich üblichen Mengen. Beispiele für erfindungsgemäß geeignete Katalysatoren sind die in der Klebstoffchemie gängigen und bekannten Katalysatoren, wie beispielsweise organische Zinnverbindungen, wie das zuvor genannte Dibutylzinndilaurat (DBTL) oder aber Alkylmercaptidverbindungen des Dibutylzinns, oder aber organische Eisen-, Blei-, Cobalt-, Wismut-, Antimon- und Zinkverbindungen sowie Mischungen der zuvor genannten Verbindungen oder Katalysatoren auf Aminbasis, wie tertiäre Amine, 1,4-Diazabicyclo[2.2.2]octan und Dimorpholinodiethylether sowie deren Mischungen. Erfindungsgemäß besonders bevorzugt ist Dibutylzinndilaurat (DBTL), insbesondere in Kombination mit Klebstoffen auf Basis der vorgenannten reaktiven, vorzugsweise silanmodifizierten Poly-α-olefine. Die eingesetzten Mengen an Katalysator(en) können in weiten Bereichen variieren; insbesondere beträgt die eingesetzte Katalysatormenge 0,01 bis 5 Gew.-%, bezogen auf den Klebstoff.

Zur Steuerung der Anwendungseigenschaften der Klebstoffe können diesen außerdem weitere Additive zugesetzt sein, wie beispielsweise Weichmacher, hochsiedende organische Öle oder Ester oder andere der Plastifizierung dienende Additive, Stabilisatoren, insbesondere UV-Stabilisatoren, Antioxidantien, Säurefänger, Füllstoffe (insbesondere optisch bzw. visuell nicht wahrnehmbare Füllstoffe mit Teilchengrößen im Nanometerbereich), Alterungsschutzmittel und dergleichen.

Zur Steuerung der offenen Zeit und/oder der Adhäsionseigenschaften der zuvor genannten Klebstoffe, insbesondere auch im Hinblick auf eine verbesserte Handhabbarkeit, können den vorgenannten Schmelzklebstoffen außerdem weitere Additive auf Basis nichtreaktiver Polymere, Harze und/oder Wachse zugesetzt sein. Auf diese Weise lassen sich die Klebstoffeigenschaften anwendungsbezogen einstellen und sozusagen maßschneidern. Die Menge an nichtreaktiven Polymeren, Harzen und/oder Wachsen kann in weiten Bereichen variieren. Im allgemeinen liegt sie im Bereich von 1 Gew.-% bis 70 Gew.-%, insbesondere 5 Gew.-% bis 65 Gew.-%, vorzugsweise 10 Gew.-% bis 60 Gew.-%, bezogen auf den Klebstoff. Dennoch kann es anwendungsbedingt oder einzelfallabhängig erforderlich sein, von den vorgenannten Mengen abzuweichen.

Was die nichtreaktiven Polymere anbelangt, so können diese beispielsweise ausgewählt sein aus der Gruppe von (i) Ethylen/Vinylacetat-Copolymeren oder -Terpolymeren, insbesondere solchen mit Vinylacetat-Gehalten zwischen 12 und 40 Gew.-%, insbesondere 18 bis 28 Gew.-%, und/oder mit Schmelzindizes (MFIs, DIN 53735) von 8 bis 800, insbesondere 150 bis 500; (ii) Polyolefinen, wie unmodifizierten amorphen Poly-α-olefinen, insbesondere mit zahlenmittleren Molekulargewichten Mₙ von 5.000 bis 25.000 g/mol, vorzugsweise 10.000 bis 20.000 g/mol, und/oder mit Erweichungsbereichen nach Ring und Kugel zwischen 80 und 170 °C, vorzugsweise zwischen 80 und 130 °C, oder unmodifizierten metallocenkatalytisch hergestellten Polyolefinen (vgl. DE 103 23 617 A1); und (iii) (Meth-)acrylaten wie Styrol(meth)acrylaten sowie Mischungen dieser Verbindungen.

Was die nichtreaktiven Harze anbelangt, so können diese insbesondere ausgewählt sein aus der Gruppe von Kohlenwasserstoffharzen, insbesondere aliphatischen, cyclischen oder cycloaliphatischen Kohlenwasserstoffharzen, gegebenenfalls modifizierten Kolophoniumharzen (z. B. Kolophoniumharzestern), Terpenphenolharzen, Cumaron-Indenharzen, α-Methylstyrolharzen, polymerisierten Tallharzestern und/oder Ketonaldehydharzen.

Was die nichtreaktiven Wachse anbelangt, so können beispielsweise Polyolefinwachse, wie Polyethylen- und Polypropylenwachse, oder auf dieser Basis modifizierte Wachse eingesetzt werden.

Um die Haftung der Kunststoffolie auf dem Holzwerkstoffsubstrat noch weiter zu verbessern bzw. zu steigern, kann die auf das Holzwerkstoffsubstrat aufzukaschierende Rückseite der Kunststoffolie vor dem Klebstoffauftrag gegebenenfalls einer Vorbehandlung, insbesondere mittels Korona- oder Plasmabehandlung, unterzogen werden. Gleichermaßen besteht - zur Verbesserung bzw. Steigerung des Haftverbunds zwischen Kunststoffolie und Holzwerkstoffsubstrat - die Möglichkeit, gegebenenfalls die auf das Holzwerkstoffsubstrat aufzukaschierende Rückseite der Kunststoffolie haftvermittelnd auszubilden bzw. auszurüsten. Letzteres kann insbesondere vorteilhaft sein, wenn als Kunststoffolie ein mehrschichtiges Folienlaminat oder -koextrudat zum Einsatz kommt. In diesem Fall kann beispielsweise die Innenfolie haftvermittelnd ausgerüstet bzw. ausgebildet sein, während die Außenfolie als transparente, harte und kratzfeste Hochglanzfolie ausgebildet sein kann.

Wie zuvor erläutert, eignet sich die erfindungsgemäße Verwendung insbesondere zur Kaschierung von Kunststoffolien auf Holzwerkstoffsubstraten mittels eines Schmelzklebstoffs als Kaschiermittel.

Gemäß einer besonderen Ausführungsform der erfindungsgemäßen Verwendung kann es vorgesehen sein, zwischen der Kunststoffolie und dem Holzwerkstoffsubstrat zusätzlich eine Dekorschicht anzuordnen bzw. vorzusehen. Bei dieser Ausführungsform wird die Kunststoffolie zunächst auf die Dekorschicht auflaminiert bzw. aufkaschiert, welche dann wiederum auf das Werkstoffsubstrat aufkaschiert wird. Auf diese Weise wird erfindungsgemäß eine noch weiter gesteigerte Variabilität in der Oberflächengestaltung der Holzwerkstoffoberfläche durch die zusätzliche Dekorschicht ermöglicht. Bei der zusätzlichen Dekorzwischenschicht kann es sich beispielsweise um eine Papier- oder Pappschicht handeln (z. B. mit einer Dicke, welche in etwa der Dicke der Folie entspricht, d. h. im allgemeinen im Bereich von 0,005 bis 15 mm, insbesondere 0,01 bis 10 mm, vorzugsweise 0,05 bis 5,0 mm, besonders bevorzugt 0,075 bis 3,0 mm, liegt). Anstelle von Pappe oder Papier kann die optional vorgesehene, zusätzliche Dekorschicht aber grundsätzlich auch andere Materialien umfassen, beispielsweise Kunststoff, Textilien, Leder, Metall und dergleichen.

Nach dem Aufkaschieren der Kunststoffolie auf das Holzwerkstoffsubstrat, gegebenenfalls mit der optionalen Dekorzwischenschicht, kann sich eine Nachbearbeitung, insbesondere in Form einer Konfektionierung, anschließen. Eine derartige Nachbearbeitung, insbesondere Konfektionierung, kann insbesondere eine Größenveränderung bzw. Dimensionierung, vorzugsweise ein Zuschneiden oder dergleichen, der auf diese Weise hergestellten Verbundmaterialien und/oder eine Wärmebehandlung der auf diese Weise hergestellten Verbundmaterialien und/oder eine Lackierung der Ober- bzw. Außenseite der aufkaschierten Kunststoffolie (insbesondere mit einem Hochglanzklarlack) umfassen.

Insbesondere hat es sich als vorteilhaft erwiesen, wenn die wie vorstehend beschrieben hergestellten Verbundmaterialien im Rahmen der Nachbearbeitung, insbesondere unmittelbar nach ihrer Herstellung, einer Wärmebehandlung ausgesetzt werden. Dabei werden die erfindungsgemäß hergestellten Verbundmaterialien, insbesondere an ihrer kunststoffolienbeschichteten Oberfläche, einer Temperatur im Bereich von 50 bis 125 °C, insbesondere 50 bis 100 °C, vorzugsweise 60 bis 80 °C, ausgesetzt. Denn die Anmelderin hat überraschenderweise herausgefunden, daß sich durch eine derartige Wärmebehandlung der Glanz der erzeugten Oberfläche vollkommen unerwartet noch weiter steigern läßt (z. B. um mindestens 5 % (relativ), bezogen auf den absoluten Glanzwert nach DIN 67530, insbesondere um mindestens 10 %). Die Wärmebehandlung, welche beispielsweise durch geeignete Wärmeeinstrahlung z. B. in einem Wärmekanal bzw. -tunnel, einer Wärmekammer, einem Wärmestand etc. durchgeführt werden kann, ist besonders effizient, wenn sie unmittelbar nach dem Kaschiervorgang durchgeführt wird, insbesondere innerhalb von 30 Minuten nach dem Kaschiervorgang, vorzugsweise innerhalb von 15 Minuten nach dem Kaschiervorgang, besonders bevorzugt innerhalb von 10 Minuten nach dem Kaschiervorgang. Ohne sich auf eine bestimmte Theorie festlegen zu wollen, kann die Glanzsteigerung durch die nachfolgende Wärmebehandlung möglicherweise aufgrund der Tatsache erklärt werden, daß infolge der Wärmebehandlung eine weitergehende Plastifizierung der Kunststoffolie und des darunterliegenden Klebstoffs und/oder eine weitere Glättung der Oberflächenstruktur erfolgt, verbunden mit einer Reduktion in bezug auf die Spannung der aufkaschierten Kunststoffolie.

Die erfindungsgemäße Verwendung ist mit einer Vielzahl von Vorteilen verbunden, von denen nachfolgend einige - jedoch keinesfalls beschränkend - aufgeführt werden:
Die erfindungsgemäße Verwendung ist in hohem Maße investitions-, energie- und anwendungskostengünstig, platzsparend durchführbar sowie qualitäts- und leistungsstark und gleichermaßen flexibel in der Anwendung.

Aufgrund des Wegfalls des Erfordernisses von Lackierungen und dergleichen, insbesondere aufgrund der Vermeidung kostenintensiver und bei Verwendung von Lösemittellacken auch ökologisch bedenklicher Lackierprozesse von flächigen Holzwerkstoffoberflächen, arbeitet die erfindungsgemäße Verwendung weitestgehend emissionsfrei und damit umweltverträglich und darüber hinaus wirtschaftlicher. Es ermöglicht daher Produzenten von Gegenständen aus beschichteten bzw. mit Kunststoffolien kaschierten Holzwerkstoffsubstraten neue innovative Gestaltungsmöglichkeiten für die Beschichtungen und deren Dekore.

Im Vergleich zu aufwendigen Lackierungs- oder anderen Kaschierverfahren des Standes der Technik ermöglicht die erfindungsgemäße Verwendung eine Produktionsrealisierung mit einem einzigen Arbeitsschritt anstatt mehrerer separater Arbeitsgänge.

Mit der erfindungsgemäßen Verwendung lassen sich beispielsweise auch für die Holz- bzw. Möbelindustrie geeignete, mit einer Hochglanzbeschichtung und gegebenenfalls einem zusätzlichen Dekor versehene Holz- bzw. Möbelfronten (z. B. Küchenfronten) mittels entsprechender Klebstoff- und Folienanwendung herstellen.

Gemäß typischer Ausgestaltungen kann die erfindungsgemäße Verwendung - rein veranschaulichend und nicht beschränkend - wie folgt durchgeführt werden.

Mit der erfindungsgemäßen Verwendung lassen sich ebene bzw. glatte, hochglänzende Oberflächen auf Holzwerkstoffplatten mit dünnen Transparentfolien erzielen, indem z. B. nach Ausgestaltungsform (A) beispielsweise ca. 40 bis 150 µm transparenter Schmelzklebstoff zur konturgenauen Bedeckung der Holzwerkstoffoberfläche verwendet wird; alternativ kann nach Ausgestaltungsform (B) eine dünne Transparentfolie mittels transparenten Schmelzklebstoffs auf eine beliebig bedruckte Papierbahn ("Dekorzwischenschicht") und dieser Verbund dann auf die Holzwerkstoffoberfläche aufkaschiert werden, wobei es durch den Kaschierdruck gleichermaßen zu einer Glättung der von Natur aus relativ rauhen Holzwerkstoffoberfläche kommt, im Fall der Ausgestaltungsform (B) durch die verformbare Papierbahn. Gemäß einer wiederum alternativen Ausgestaltungsform (C) kann eine transparente, mehrschichtige Koextrudatfolie verwendet werden; in diesem Fall ist die spätere Außenfolie als hochtransparente, kratzfeste Oberfolie auszuwählen, die koextrudierte spätere Innenfolie als hochtransparente, plastisch verformbare Unterfolie zu wählen, wobei es auch hier in Verbindung mit dem dann geringeren transparenten Schmelzklebstoffauftrag von z. B. nur ca. 15 bis 75 µm ebenfalls zu einer optischen Glättung der rauhen Holzwerkstoffoberfläche kommt. Allen drei aufgeführten Ausgestaltungsformen (A) bis (C) ist gemeinsam, daß es zu keinerlei mikroskopischen Lufteinschlüssen beim Kaschiervorgang kommt, da ansonsten eine optische Vergrauung und damit keine Hochglanzoberfläche resultieren würde.

Wie zuvor beschrieben, können als Schmelzklebstoffe erfindungsgemäß grundsätzlich sowohl thermische als auch reaktive Systeme verwendet werden. Grundsätzlich sollten die Klebstoffe transparent und gegen Vergilbung durch UV-Licht stabilisiert sein. Die Klebstoffauswahl kann dann in Abhängigkeit von der Klebstoffauftragstechnik und den späteren Anforderungen an die Verbundfestigkeit der Klebung erfolgen: Erfolgt z. B. die rückseitige Beschichtung der Folie mit Schmelzklebstoff bevorzugt im kontaktlosen Auftrag, wie beispielsweise in der DE 198 17 835 A1 beschrieben, sollte ein extrudierbarer und filmbildender Schmelzklebstoff verwendet werden. Beispielhafte Klebstoffe für diese Ausführungsform sind der thermoplastische Schmelzklebstoff Jowatherm^{®} 274.00, der UV-vernetzende Schmelzklebstoff Jowatherm^{®} UV 244.90, der feuchtigkeitsvernetzende und silanterminierte Schmelzklebstoff Jowatherm-Reaktant^{®} 628.90 und der feuchtigkeitsvernetzende und isocyanatterminierte Schmelzklebstoff Jowatherm-Reaktant^{®} EP 13602.70, alle vertrieben von der Jowat AG, Detmold, Deutschland. Der Klebstoffauftrag kann alternativ und bevorzugt über eine Schlitzdüse im Kontaktverfahren erfolgen. Technologisch möglich, aber wegen der größeren Gefahr des Eintrags von Verunreinigungen weniger bevorzugt ist die Verwendung eines Walzenauftragsverfahrens.

Die erfindungsgemäße Verwendung ermöglicht - aufgrund der einfachen Verwendung vielfacher Beschichtungsmaterialien - eine Vielzahl von Einsatz-, Anwendungs- und Innovationsmöglichkeiten für die betreffenden Produkte.

Zudem lassen sich durch die erfindungsgemäße Verwendung die Kosten für die Herstellung der folienbeschichteten Holzwerkstoffsubstrate erheblich reduzieren.

Im Unterschied zu reinen Beschichtungsverfahren (vgl. WO 02/094457 A2, welche alternativ nur eine Beschichtung mit einem reaktiven, transparenten Polyurethanschmelzklebstoff, gegebenenfalls mit einem darauf aufgetragenen Trennmittel, vorsieht) wird erfindungsgemäß die Verwendung geeigneter Kunststoffolien vorgeschlagen, welche mittels Schmelzklebstoffen aufkaschiert werden. Die erfindungsgemäße Verwendung ist dabei kostengünstig, weil nur ein einziger Veredelungsschritt durchgeführt werden muß, und es ist - im Vergleich zum vorgeschlagenen Verfahren der WO 02/094457 A2 - wesentlich flexibler und produktiver. Die erfindungsgemäße Verwendung ist gegenüber der WO 02/094457 A2 flexibler, weil durch Auswahl der Folie beispielsweise hochglänzende, stark anfeuernde Anmutungen erzielt werden können, aber auch mattierende, kälkende Optiken resultieren können; je nach Wunsch können volltransparente bis hin zu rückseitig bedruckten oder durchgefärbten Folien verwendet werden. Die erfindungsgemäße Verwendung ist gegenüber der WO 02/094457 A2 produktiver, weil die flächigen Holzwerkstoffe nach erfolgter Folienkaschierung sofort weiterverarbeitet werden können, wohingegen die gemäß der WO 02/094457 A2 vorgeschlagene Beschichtung mit feuchtigkeitsvernetzendem PUR-Schmelzklebstoff wegen des zunächst thermoplastischen Verhaltens der Beschichtungsmasse nur geringe Vorschubgeschwindigkeiten erlaubt.

Die nach der erfindungsgemäßen Verwendung erhältlichen Produkte, d. h. Verbundmaterialien, weisen ein zumindest im wesentlichen flächiges Trägermaterial in Form einer an ihrer Oberseite transparent ausgebildeten Kunststoffolie auf, wobei die Kunststoffolie mittels eines geeigneten Verbindungs- bzw. Kaschiermittels, nämlich eines Klebstoffs, auf ein Holzwerkstoffsubstrat aufkaschiert bzw. auflaminiert ist derart, daß die Kunststoffolie dauerhaft und vollflächig mit dem Substrat verbunden ist, insbesondere die Kunststoffolie auf das Holzwerkstoffsubstrat aufkaschiert ist.

Es resultiert somit ein Verbundmaterial, nämlich ein Holzwerkstoffsubstrat mit einer Hochglanzoberfläche, welches eine an seiner Oberseite transparent ausgebildete Kunststoffolie aufweist, welche mit ihrer Unter- bzw. Rückseite mittels eines Kaschiermittels auf das Holzwerkstoffsubstrat aufkaschiert ist derart, daß die Kunststoffolie dauerhaft und vollflächig mit dem Holzwerkstoffsubstrat verbunden ist, so daß ein Holzwerkstoffsubstrat mit einer Hochglanzoberfläche resultiert.

Für weitergehende Einzelheiten in bezug auf die zuvor beschriebenen Produkte bzw. Verbundmaterialien kann auf die obigen Ausführungen zu der erfindungsgemäßen Verwendung verwiesen werden, welche in bezug auf die Produkte bzw. Verbundmaterialien entsprechend gelten.

Wie zuvor geschildert, lassen sich die nach der erfindungsgemäßen Verwendung erhaltenen Produkte bzw. Verbundmaterialien in der Holz- und Möbelindustrie, insbesondere zur Herstellung von Möbeln und Einrichtungsgegenständen, einsetzen.

Weitere Ausgestaltungen, Abwandlungen, Variationen und Vorteile der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung jedoch keinesfalls beschränken.

### Ausführungsbeispiele:

### Beispiele 1A bis 1D:

Eine auf einer Seite farbig bedruckte, bahnförmige dekorative Kunststoffolie auf Basis einer orientierten Polyesterfolie ("Hochglanzfolie") wird auf ihrer mit der Bedruckung versehenen Seite mittels einer Schlitzdüse oder Kaschierwalze vollflächig und mit gleichmäßiger Schichtdicke in einer Menge von ca. 50 g/m² mit einem Schmelzklebstoff beaufschlagt.

Als Schmelzklebstoffe werden in den vier Versuchen alternativ vier verschiedene, jeweils von der Jowat AG, Detmold, Deutschland, vertriebene Klebstoffe eingesetzt, nämlich:
- ein Polyolefin-Folienkaschier-Schmelzklebstoff vom Typ Jowatherm^{®} 274.00 (Verarbeitungstemperatur/Düse: ca. 125 °C) (Beispiel 1A),
- ein UV-Schmelzklebstoff vom Typ Jowatherm^{®} UV 244.90 (Verarbeitungstemperatur: 120 bis 140 °C) (Beispiel 1B),
- ein reaktiver, isocyanatfreier feuchtigkeitsvernetzender Polyolefin-Schmelzklebstoff vom Typ Jowatherm^{®} 628.90/91 (Verarbeitungstemperatur: 160 bis 190 °C) (Beispiel 1C) und
- ein reaktiver feuchtigkeitsvernetzender Polyurethan-Schmelzklebstoff vom Typ Jowatherm-Reaktant^{®} EP 13602.70 (Verarbeitungs- bzw. Reaktivierungstemperatur/Kaschierwalze: ca. 130 °C) (Beispiel 1D).

Die auf diese Weise mit Klebstoff beaufschlagte bahnförmige Kunststoffolie wird anschließend mit einem plattenförmigen Holzwerkstoffsubstrat in Form einer MDF-Platte zusammengeführt. Das Zusammenführen folgt unter Druck bzw. Anpressen mittels eines beheizbaren Kalanders, so daß die Kunststoffolie mittels des Schmelzklebers auf die MDF-Platte aufkaschiert und ein inniger Verbund von Kunststoffolie einerseits und MDF-Platte andererseits erzeugt wird.

Das mit der Kunststoffolie kaschierte Holzwerkstoffsubstrat wird nachfolgend abgekühlt und kann nachfolgend gegebenenfalls für die betreffende Anwendung zugeschnitten bzw. dimensioniert werden. Es resultiert eine hochglanzbeschichtete MDF-Platte, welche insbesondere in der Holz- bzw. Möbelindustrie (z. B. für Küchenfronten) eingesetzt werden kann.

Gegenüber herkömmlichen Lackierverfahren ist die erfindungsgemäße Verwendung wesentlich vereinfacht. Außerdem werden Lösemittelemissionen vermieden. Zudem wird die Bedruckung der Folie durch die innenseitige Anordnung in effizienter Weise geschützt.

### Beispiel 2:

Mittels des Klebstoffs Jowatherm-Reaktant^{®} EP 13602.70 werden farblich modifizierte, geprimerte oder ungeprimerte PET-Hochglanzfolien von der Mitsubishi Polyester Film GmbH, Wiesbaden, Deutschland, in variablen Stärken von 25 bis 300 µm auf eine MDF-Platte kaschiert. Mit einer Schlitzdüse wird ein gleichmäßiger, streifenfreier Klebstoffauftrag ohne Lufteinschlüsse und Bläschen auf den Folien erzielt, welche dann in üblicher Weise auf den Holzwerkstoffträger aufkaschiert werden.

Bei einem weiteren Versuch wird ein ungetränktes 60 g/m² Dekorpapier auf eine PET-Hochglanzfolie in Stärken von 25 bis 125 µm aufkaschiert. Der Klebstoffauftrag liegt hierbei jeweils konstant bei 15 g/m². Eine fehlerfreie, gespiegelte, hochglänzende Folienoberfläche ist das Ergebnis. Diese dublierten PET-Folien werden dann auf melaminharzbeschichtete MDF-Spanplatten aufkaschiert. Auch hierbei wird eine ruhige, fehlerfreie Hochglanzoberfläche erzielt.

Als PET-Hochglanzfolien dienen hochtransparente, biaxial gereckte Polyethylenterephthalatfolien (PET-Folien) vom Typ "Hostaphan^{®}" der Mitsubishi Polyester Film GmbH, Wiesbaden, Deutschland.

## Patentansprüche

1. Verwendung einer Kunststoffolie zur Erzeugung einer Hochglanzoberfläche auf einem Holzwerkstoffsubstrat mittels Kaschierung der Kunststoffolie auf dem Holzwerkstoffsubstrat, wobei eine an ihrer Oberseite transparent ausgebildete Kunststoffolie mit einer Dicke von 0,005 bis 15 mm, welche an ihrer Oberseite einen Glanzwert gemäß DIN 67530 bei einem Meßwinkel von 60° von mindestens 100 aufweist, mittels eines Kaschiermittels in Form eines transparenten, lösemittelfreien, extrudierbaren sowie filmbildenden, vollflächig und mit gleichmäßiger Schichtdicke aufgetragenen Schmelzklebstoffs auf ein plattenförmiges und/oder flächiges Holzwerkstoffsubstrat aufkaschiert und dauerhaft und vollflächig mit dem Holzwerkstoffsubstrat verbunden wird, so daß ein Holzwerkstoffsubstrat mit einer Hochglanzoberfläche resultiert.

2. Verwendung nach Anspruch 1, **dadurch gekennzeichnet, daß** zunächst die Kunststoffolie und/oder das Holzwerkstoffsubstrat, vorzugsweise nur die Kunststoffolie, mit dem Kaschiermittel beaufschlagt wird bzw. werden und anschließend die Kunststoffolie und das Holzwerkstoffsubstrat zusammengebracht werden derart, daß die Kunststoffolie dauerhaft mit dem Holzwerkstoffsubstrat verbunden und/oder die Kunststoffolie auf das Holzwerkstoffsubstrat aufkaschiert wird.

3. Verwendung nach einem oder mehreren der vorangehenden Ansprüche, **dadurch gekennzeichnet, daß** das Zusammenführen von Kunststoffolie und Holzwerkstoffsubstrat unter Druck und/oder Anpressen erfolgt, insbesondere mittels Rollen, Walzen, Kalandern und dergleichen, und/oder daß das Zusammenführen von Kunststoffolie und Holzwerkstoffsubstrat unter Erwärmen erfolgt, insbesondere oberhalb des Schmelz- oder Erweichungsbereiches des Kaschiermittels, insbesondere Klebstoffs.

4. Verwendung nach einem oder mehreren der vorangehenden Ansprüche, **dadurch gekennzeichnet, daß** die Kunststoffolie bahnförmig ausgebildet ist und/oder daß als Kunststoffolie eine einschichtige oder mehrschichtige Kunststoffolie eingesetzt wird, insbesondere wobei im Fall einer mehrschichtigen Kunststoffolie ein Laminat oder Koextrudat aus mindestens zwei Kunststoffolien, insbesondere ein Laminat oder Koextrudat auf Basis gleicher oder vorzugsweise verschiedener Kunststoffolien, eingesetzt wird.

5. Verwendung nach einem oder mehreren der vorangehenden Ansprüche, **dadurch gekennzeichnet, daß** als Kunststoffolie eine lackierte oder unlackierte Kunststoffolie eingesetzt wird und/oder daß als Kunststoffolie eine rückseitig bedruckte oder unbedruckte Kunststoffolie eingesetzt wird und/oder daß die transparente Kunststoffolie ein- oder beidseitig lackiert und/oder rückseitig bedruckt ist und/oder daß als Kunststoffolie eine Kunststoffolie auf Basis von Polyolefinen, insbesondere Polyethylen und Polypropylen; Polyestern, insbesondere Polyethylenterephthalaten; Poly(meth-)acrylaten; Polystyrolen; und/oder Acetaten oder ein Verbund aus mindestens zwei Kunststoffolien auf Basis dieser Materialien eingesetzt wird und/oder daß die Kunststoffolie eine Dicke von 0,01 bis 10 mm, vorzugsweise 0,05 bis 5,0 mm, besonders bevorzugt 0,075 bis 3,0 mm, aufweist.

6. Verwendung nach einem oder mehreren der vorangehenden Ansprüche, **dadurch gekennzeichnet, daß** die Kunststoffolie an ihrer Oberseite einen Glanzwert gemäß DIN 67530 bei einem Meßwinkel von 60° von mindestens 120, vorzugsweise mindestens 140, besonders bevorzugt mindestens 150, aufweist und/oder daß die Kunststoffolie an ihrer Oberseite einen Glanzwert gemäß DIN 67530 bei einem Meßwinkel von 60° im Bereich von 100 bis 200, vorzugsweise 120 bis 180, insbesondere 140 bis 160, aufweist und/oder daß die Kunststoffolie eine gereckte, insbesondere uniaxial, vorzugsweise biaxial gereckte, Kunststoffolie ist und/oder daß die Zugfestigkeit der Kunststoffolie in Längs- und Querrichtung mindestens 100 N/mm² beträgt und/oder daß der Elastizitätsmodul der Kunststoffolie in Längs- und Querrichtung mindestens 3.000 N/mm² beträgt und/oder daß die Reißdehnung der Kunststoffolie in Längs- und Querrichtung mindestens 90 % beträgt.

7. Verwendung nach einem oder mehreren der vorangehenden Ansprüche, **dadurch gekennzeichnet, daß** das Holzwerkstoffsubstrat eine Massivholzplatte, eine Spanplatte, eine MDF-Platte, ein Furnier oder eine Leichtbauplatte ist.

8. Verwendung nach einem oder mehreren der vorangehenden Ansprüche, **dadurch gekennzeichnet, daß** die Beaufschlagung der Kunststoffolie und/oder des Holzwerkstoffsubstrats, vorzugsweise der Kunststoffolie, mit dem Kaschiermittel mit derartigen Mengen erfolgt, daß einerseits ein sicherer Verbund zwischen Kunststoffolie und Holzwerkstoffsubstrat und andererseits eine ebene Oberflächenstruktur des unterliegenden Holzwerkstoffsubstrats resultiert, und/oder daß das Kaschiermittel in einer Menge von 0,1 bis 200 g/m², vorzugsweise 0,5 bis 100 g/m², insbesondere 1 bis 50 g/m², aufgetragen wird und/oder daß das Kaschiermittel mit einer Schichtdicke von 1 bis 1.000 µm, vorzugsweise 1 bis 500 µm, besonders bevorzugt 5 bis 250 µm, besonders bevorzugt 25 bis 150 µm, aufgetragen wird und/oder daß das Kaschiermittel unter Erwärmen, insbesondere unter Aufschmelzen des Kaschiermittels, vorzugsweise Klebstoffs, bevorzugt bei Temperaturen im Bereich von 80 bis 200 °C, insbesondere 90 bis 170 °C, aufgetragen wird.

9. Verwendung nach einem oder mehreren der vorangehenden Ansprüche, **dadurch gekennzeichnet, daß** das Kaschiermittel oxiditations- und/oder farbstabil, insbesondere UV-stabilisiert und/oder vergilbungsresistent, ausgebildet ist.

10. Verwendung nach einem oder mehreren der vorangehenden Ansprüche, **dadurch gekennzeichnet, daß** als Schmelzklebstoffe thermoplastische oder reaktive Schmelzklebstoffe zum Einsatz kommen und/oder daß als Schmelzklebstoffe thermoplastische Schmelzklebstoffe, insbesondere Schmelzklebstoffe auf Basis von Ethylen/Vinylacetaten (EVA); Polyolefinen, wie amorphen Poly-α-olefinen oder metallocenkatalytisch hergestellten Polyolefinen; Polyacrylaten; Copolyamiden; Copolyestern; und/oder thermoplastischen Polyurethanen oder ihren entsprechenden Co- und/oder Terpolymeren, eingesetzt werden und/oder daß als Schmelzklebstoffe reaktive Schmelzklebstoffe, insbesondere feuchtigkeitsvernetzende und/oder strahlenvernetzende, insbesondere UV-vernetzende Schmelzklebstoffe, vorzugsweise Schmelzklebstoffe auf Basis von silangepfropften amorphen Poly-α-olefinen und/oder isocyanatterminierten Polyurethanen, besonders bevorzugt Schmelzklebstoffe auf Basis von isocyanatterminierten Polyurethanen, eingesetzt werden und/oder daß als Schmelzklebstoffe reaktive Schmelzklebstoffe auf Basis strahlenvernetzender reaktiver Klebstoffe, insbesondere unter UV-Bestrahlung vernetzender Schmelzklebstoffe, eingesetzt werden.

11. Verwendung nach einem oder mehreren der vorangehenden Ansprüche, **dadurch gekennzeichnet, daß** zwischen der Kunststoffolie und dem Holzwerkstoffsubstrat zusätzlich eine Dekorschicht, insbesondere ein Papier oder eine Pappe, angeordnet wird.

12. Verwendung nach einem oder mehreren der vorangehenden Ansprüche, **dadurch gekennzeichnet, daß** sich dem Aufkaschieren der Kunststoffolie auf das Holzwerkstoffsubstrat eine Wärmebehandlung, insbesondere bei einer Temperatur im Bereich von 50 bis 125 °C, bevorzugt 50 bis 100 °C, besonders bevorzugt 60 bis 80 °C, vorzugsweise unmittelbar nach dem Kaschiervorgang, anschließt und/oder daß sich dem Aufkaschieren der Kunststoffolie auf das Holzwerkstoffsubstrat eine Nachbearbeitung anschließt, insbesondere wobei Nachbearbeitung eine Konfektionierung und/oder Größenveränderung (Dimensionierung), insbesondere ein Zuschneiden und dergleichen, und/oder eine Wärmebehandlung der auf diese Weise hergestellten Verbundmaterialien und/oder eine Lackierung der Oberseite der aufkaschierten Kunststoffolie umfaßt.

13. Verwendung nach einem oder mehreren der vorangehenden Ansprüche zur Herstellung von Möbeln und Einrichtungsgegenständen beliebiger Art und/oder in der Holz- und Möbelindustrie.

## Claims

1. A use of a plastic film for producing a high gloss surface on a wood substrate by means of laminating the plastic film onto the wood substrate, wherein a plastic film being embodied transparently on its top surface, having a thickness of 0.005 to 15 mm, having a gloss value according to DIN 67530 of at least 100 at a measuring angle of 60°, is laminated onto a plate-shaped, and/or plane wood substrate by means of a laminating means in the form of a transparent, solvent-free, extrudable and film-forming hot melt adhesive being applied in a holohedral manner and at uniform layer thickness, and is joined with the wood substrate in a permanent and holohedral manner such that the result is a wood substrate having a high gloss surface.

2. The use according to claim 1, **characterized in that** initially the plastic film and/or the wood substrate, preferably only the plastic film, is/are equipped with the laminating means, and subsequently the plastic film and the wood substrate are combined such that the plastic film is joined with the wood substrate and/or the plastic film is laminated onto the wood substrate.

3. The use according to one or more of the previous claims, **characterized in that** the combining of plastic film and wood substrate is carried out under pressure and/or pressing on, in particular by means of rollers, cylinders, calenders, and the like, and/or the combining of plastic film and wood substrate is carried out under heating, in particular above the melting or softening range of the laminating means, in particular of the adhesive.

4. The use according to one or more of the previous claims, **characterized in that** the plastic film is embodied as a web, and/or a one-layer or multi-layer plastic film is utilized as the plastic film, in particular wherein in the case of a multi-layer plastic film, a laminate or co-extrudate made from at least two plastic films, in particular a laminate or co-extrudate on the basis of equal or preferably different plastic films is utilized.

5. The use according to one or more of the previous claims, **characterized in that** a varnished or unvarnished plastic film is utilized as the plastic film, and/or a backface printed or unprinted plastic film is utilized, and/or the transparent plastic film is varnished on one or both sides, and/or is printed on the backface, and/or a plastic film based on polyolefins, in particular polyethylene and polypropylene; polyesters, in particular polyethylene terephthalates; poly(meth-)acrylates; polystyrenes; and/or acetates, or a compound consisting of at least two plastic films based on these materials is utilized as the plastic film, and/or the plastic film has a thickness of 0.01 to 10 mm, preferably 0.05 to 5.0 mm, particularly preferred 0.075 to 3.0 mm.

6. The use according to one or more of the previous claims, **characterized in that** the plastic film has a gloss value on its top surface according to DIN 67530 of at least 120, preferably at least 140, particularly preferred at least 150, at a measuring angle of 60°, and/or the plastic film has a gloss value on its top surface according to DIN 67530 in the range of 100 to 200, preferably 120 to 180, in particular 140 to 160, and/or the plastic film is an elongated, in particular uniaxially, preferably biaxially elongated plastic film, and/or the tensile strength of the plastic film in longitudinal and lateral direction is at least 100 N/mm², and/or the elasticity module of the plastic film in longitudinal and lateral direction is at least 3,000 N/mm², and/or the elongation of break of the plastic film in longitudinal and lateral direction is at least 90%.

7. The use according to one or more of the previous claims, **characterized in that** the wood substrate is a solid wood board, a particle board, an MDF board, a veneer, or a lightweight building board.

8. The use according to one or more of the previous claims, **characterized in that** the application of the plastic film, and/or of the wood substrate, preferably the plastic film, with the laminating means is carried out at such amounts that both a safe joint results between the plastic film and the wood substrate, and a plane surface structure of the underlying wood substrate results, and/or the laminating means is applied at an amount of 0.1 to 200 g/m², preferably 0.5 to 100 g/m², in particular 1 to 50 g/m², and/or the laminating means is applied at a layer thickness of 1 to 1,000 µm, preferably 1 to 500 µm, particularly preferred 5 to 250 µm, particularly preferred 25 to 150 µm, and/or the laminating means is applied under heating, in particular by means of fusing on of the laminating means, preferably the adhesive, preferably at temperatures in the range of 80 to 200 °C, in particular 90 to 170 °C.

9. The use according to one or more of the previous claims, **characterized in that** the laminating means is embodied in a oxidation and/or color stable manner, in particular UV-stabilized and/or in a manner resisting to yellowing.

10. The use according to one or more of the previous claims, **characterized in that** thermoplastic or reactive melt adhesives are utilized as the hot melt adhesives, and/or thermoplastic melt adhesives, in particular melt adhesives based on ethylene/vinyl acetates (EVA); polyolefins, such as amorphous poly-α-olefins, or metal catalytically produced polyolefins; polyacrylates; copolyamides; copolyesters; and/or thermoplastic polyurethanes, or their respective co and/or terpolymers, are utilized as the hot melt adhesives, and/or reactive melt adhesives, in particular moisture cross-linking and/or jet cross-linking, in particular UV-cross-linking melt adhesives, preferably melt adhesives based on silane-grafted, amorphous poly-α-olefins, and/or isocyanate-terminated polyurethanes, particularly preferred melt adhesives based on isocyanate-terminated polyurethanes, are utilized as the melt adhesives, and/or reactive melt adhesives based on jet cross-linked reactive adhesives, in particular cross-linking melt adhesives under UV radiation, are utilized as the melt adhesives.

11. The use according to one or more of the previous claims, **characterized in that** additionally a decorative layer, in particular a paper or cardboard, is disposed between the plastic film and the wood substrate.

12. The use according to one or more of the previous claims, **characterized in that** a heat treatment, in particular at a temperature in the range of 50 to 125°C, preferably 50 to 100°C, particularly preferred 60 to 80°C, is carried out subsequently to the laminating of the plastic film onto the wood substrate, preferably directly after the laminating operation, and/or post-processing is carried out subsequent to the laminating of the plastic film onto the wood substrate, in particular wherein the post-processing comprises finishing and/or size modifications (dimensioning), in particular cutting, and the like, and/or a heat treatment of the compound materials produced in this manner, and/or varnishing of the top surface of the laminated on plastic film.

13. The use according to one or more of the previous claims for the production of furniture and fitments of any desired type, and/or in the wood and furniture industries.

## Revendications

1. Utilisation d'une feuille plastique pour produire une surface à brillant élevé sur un substrat en un matériau dérivé du bois par contre-collage de la feuille plastique sur le substrat en un matériau dérivé du bois, pour laquelle une feuille plastique, configurée transparente sur sa face supérieure, ayant une épaisseur de 0,005 à 15 mm, qui sur sa face supérieure présente un degré de brillant selon DIN 67530 pour un angle de mesure de 60° d'au moins 100, est appliquée par contre-collage à l'aide d'un agent de contre-collage sous forme d'un adhésif fusible transparent, sans solvant, extrudable, ainsi que filmogène, appliqué en pleine surface et avec une épaisseur de couche uniforme, sur un substrat en un matériau dérivé du bois, en forme de lamelle et/ou bidimensionnel, et est assemblé d'une manière permanente et en pleine surface au substrat en un matériau dérivé du bois, de façon qu'il en résulte un substrat en un matériau dérivé du bois ayant une surface à brillant élevé.

2. Utilisation selon la revendication 1, **caractérisée en ce que** la feuille plastique et/ou le substrat en un matériau dérivé du bois, de préférence seulement la feuille plastique, est ou sont d'abord pourvu(s) de l'agent de contre-collage, puis la feuille plastique et le substrat en un matériau dérivé du bois sont réunis de telle sorte que la feuille plastique soit assemblée d'une manière permanente au substrat en un matériau dérivé du bois, et/ou que la feuille plastique soit appliquée par contre-collage sur le substrat en un matériau dérivé du bois.

3. Utilisation selon l'une ou plusieurs des revendications précédentes, **caractérisée en ce que** la réunion de la feuille plastique et du substrat en un matériau dérivé du bois s'effectue sous pression et/ou par compression, en particulier à l'aide de rouleaux, de cylindres, de calandres et analogues, et/ou que la réunion de la feuille plastique et du substrat en matériau dérivé du bois s'effectue par chauffage, en particulier au-delà de la plage de fusion ou de ramollissement de l'agent de contre-collage, en particulier de l'adhésif.

4. Utilisation selon l'une ou plusieurs des revendications précédentes, **caractérisée en ce que** la feuille plastique est configurée comme une feuille continue, et/ou que l'on utilise en tant que feuille plastique une feuille plastique monocouche ou multicouche, que l'on utilise en particulier dans le cas d'une feuille plastique multicouche un stratifié ou un co-extrudat d'au moins deux feuilles plastiques, en particulier un stratifié ou un co-extrudat à base de feuilles plastiques identiques ou de préférence différentes.

5. Utilisation selon l'une ou plusieurs des revendications précédentes, **caractérisée en ce qu'**on utilise en tant que feuille plastique une feuille plastique vernie ou non vernie, et/ou que l'on utilise en tant que feuille plastique une feuille plastique imprimée ou non imprimée sur son envers, et/ou que la feuille plastique transparente est vernie sur un côté ou sur les deux côtés, et/ou est imprimée sur le côté envers, et/ou que l'on utilise en tant que feuille plastique une feuille plastique à base de polyoléfines, en particulier de polyéthylène et de polypropylène ; de polyesters, en particulier de poly(téréphtalates d'éthylène) ; de poly(méth)acrylates ; de polystyrènes ; et/ou d'acétates, ou un composite d'au moins deux feuilles plastiques à base de ces matériaux, et/ou que la feuille plastique présente une épaisseur de 0,01 à 10 mm, de préférence de 0,05 à 5,0 mm, d'une manière particulièrement préférée de 0,075 à 3,0 mm.

6. Utilisation selon l'une ou plusieurs des revendications précédentes, **caractérisée en ce que** la feuille plastique présente sur sa face supérieure un degré de brillant selon DIN 67530 pour un angle de mesure de 60° d'au moins 120, de préférence d'au moins 140, d'une manière particulièrement préférée d'au moins 150, et/ou que la feuille plastique présente sur sa face supérieure un degré de brillant selon DIN 67530 pour un angle de mesure de 60° compris dans la plage de 100 à 200, de préférence de 120 à 180, en particulier de 140 à 160, et/ou que la feuille plastique est une feuille plastique étirée, en particulier étirée selon un étirage uniaxe, en particulier biaxe, et/ou que la résistance à la traction de la feuille plastique, dans le sens machine et dans le sens travers, est d'au moins 100 N/mm², et que le module d'élasticité de la feuille plastique dans le sens machine et dans le sens travers est d'au moins 3000 N/mm², et/ou que l'allongement la rupture de la feuille plastique dans le sens machine et dans le sens travers est d'au moins 90 %.

7. Utilisation selon l'une ou plusieurs des revendications précédentes, **caractérisée en ce que** le substrat en un matériau dérivé du bois est un panneau de bois massif, un panneau de particules, un panneau MDF, un placage ou une plaque légère.

8. Utilisation selon l'une ou plusieurs des revendications précédentes, **caractérisée en ce que** l'application de l'agent de contre-collage sur la feuille plastique et/ou sur le substrat en un matériau dérivé du bois, de préférence sur la feuille plastique, est effectuée en des quantités telles qu'il en résulte d'une part un composite plus sûr entre la feuille plastique et le substrat en un matériau dérivé du bois, et d'autre part une structure superficielle plane du substrat sous-jacent en un matériau dérivé du bois, et/ou que l'agent de contre-collage est appliqué en une quantité de 0,1 à 200 g/m², de préférence de 0,5 à 100 g/m², en particulier de 1 à 50 g/m², et/ou que l'agent de contre-collage est appliqué sur une épaisseur de couche de 1 à 1000 µm, de préférence de 1 à 500 µm, d'une manière particulièrement préférée de 5 à 250 µm, d'une manière particulièrement préférée de 25 à 150 µm, et/ou que l'agent de contre-collage est appliqué par chauffage, en particulier par fusion de l'agent de contre-collage, de préférence de l'adhésif, de préférence à des températures comprises dans la plage de 80 à 200°C, en particulier de 90 à 170°C.

9. Utilisation selon l'une ou plusieurs des revendications précédentes, **caractérisée en ce que** l'agent de contre-collage est configuré de façon à être stable à l'oxydation et/ou au changement de couleur, en particulier est stabilisé aux UV et/ou est résistant au jaunissement.

10. Utilisation selon l'une ou plusieurs des revendications précédentes, **caractérisée en ce que** sont utilisés en tant qu'adhésifs fusibles des adhésifs fusibles thermoplastiques ou réactifs, et/ou que sont utilisés en tant qu'adhésifs fusibles des adhésifs fusibles thermoplastiques, en particulier des adhésifs fusibles à base d'éthylène/acétates de vinyle (EVA) ; de polyoléfines, telles que les poly-α-oléfines amorphes ou les polyoléfines fabriquées par une catalyse sur métallocènes ; de polyacrylates ; de copolyamides ; de copolyesters ; et/ou de polyuréthannes thermoplastiques ou de leurs co- et/ou terpolymères correspondants, et/ou en tant qu'adhésifs fusibles des adhésifs fusibles réactifs, en particulier des adhésifs fusibles réticulables à l'humidité et/ou sous l'effet d'un rayonnement, en particulier réticulables sous l'effet d'un rayonnement UV, de préférence des adhésifs fusibles à base de poly-a -oléfines amorphes à greffage de silane et/ou de polyuréthannes à terminaison isocyanate, d'une manière particulièrement préférée des adhésifs fusibles à base de polyuréthannes à terminaison isocyanate, et/ou que sont utilisés en tant qu'adhésifs fusibles des adhésifs fusibles à base d'adhésifs réactifs réticulables sous l'effet d'un rayonnement, en particulier des adhésifs fusibles réticulables sous l'effet d'un rayonnement UV.

11. Utilisation selon l'une ou plusieurs des revendications précédentes, **caractérisée en ce qu'**entre la feuille plastique et le substrat en un matériau dérivé du bois est en outre disposée une couche décorative, en particulier un papier ou un carton.

12. Utilisation selon l'une ou plusieurs des revendications précédentes, caractérisée de préférence immédiatement après l'opération de contre-collage, et/ou que le contre-collage de la feuille plastique sur le substrat en un matériau dérivé du bois est suivi d'un post-usinage, en particulier pour laquelle le post-usinage comprend une préparation et/ou un changement de taille (dimensionnement), en particulier une découpe à la longueur et analogues, et/ou un traitement thermique des matériaux composites fabriqués de cette manière et/ou un vernissage de la face supérieure de la feuille plastique contre-collée.

13. Utilisation selon l'une ou plusieurs des revendications précédentes pour fabriquer des meubles et des garnitures de toutes natures et/ou dans l'industrie du bois et des meubles.
